# EUROPEAN PATENT APPLICATION

(11) **EP 4 303 177 A1**
(43) Date of publication of application: **10.01.2024**
(21) Application number: 22183986.3
(22) Date of filing: 08.07.2022
(51) Int. Cl.: C01B 3/38

(54) **MOLTEN METAL CATALYSED PYROLYSIS**

(71) Applicant: Nederlandse Organisatie voor toegepast- natuurwetenschappelijk onderzoek TNO, 2595 DA 's-Gravenhage (NL)
(72) Inventor: The designation of the inventor has not yet been filed
(74) Representative: Nederlandsch Octrooibureau

(57) **Abstract**

The present invention relates to the use of molten metal pyrolysis for the reforming of methane and carbon dioxide into hydrogen gas and carbon monoxide. The invention further concerns a method for the reforming of methane and carbon dioxide into hydrogen gas and carbon monoxide by molten metal pyrolysis, comprising (i) feeding a feedstock, comprising methane and carbon dioxide, into a pyrolysis reactor comprising molten metal and molten salt; (ii) pyrolyzing the methane and carbon dioxide into hydrogen gas and carbon monoxide by molten metal catalysis; and (iii) collecting a product gas containing hydrogen gas and carbon monoxide that evolves from the reactor. In a further embodiment, the invention relates to the use of a dispersion of molten metal in a layer of molten salt for the pyrolysis of a hydrocarbon.

## Description

### Field of the invention

The present invention relates to a method for molten metal pyrolysis, in particular of methane and carbon dioxide to produce hydrogen gas and carbon monoxide.

### Background art

Traditional methods for producing hydrogen (H₂), syngas (CO + H₂) and ammonia (NH₃) from hydrocarbons such as methane results in massive CO₂ emissions. Molten metal pyrolysis has emerged recently as a new method to produce H₂ and solid carbon, which can reduce the overall emissions for H₂ and C combined by over 90%. However, the scale up of technology for industrial applications is hampered by the plurality of components that are normally present in the feedstock. The variations in feedstock composition may arise from components such as C2+ gaseous hydrocarbons (e.g. ethane, propane, butane and pentane) and/or C6+ hydrocarbon liquids/wax/oils (e.g. hexane, benzene, dodecane naphtha, kerosene, asphalt) or hydrocarbon residues such as crude oil, fuel oil, cycle oil, slurry oil, gas, oil, heavy crude oil, pitch, coal tars, coal distillates, natural tar and crude bottoms. Additionally, there might be gases such as CO₂, H₂S, N₂, and H₂O vapor as impurities in the feedstocks. All these components might require different pre- and post-treatment such as removal of CO₂ (e.g. by base washing) H₂S (e.g. by base washing or ZnO guard), N₂ (e.g. by membrane separation) and H₂O (e.g. by absorption) as a pre-treatment step, gasification and separation of product carbon using O₂ or CO₂, or production NH₃ and methanol in a subsequent reactor. These treatments add several steps to the process, making it cumbersome and challenging to apply.

Molten metal treatment of gases is disclosed in US8309049, EP0655084 and US6110239. Treatment of gaseous feedstocks with molten salts is disclosed in US 2020/0283293, and Kang et al. ACS Catal. 2020, 10(13), 7032-7042. The treatment of a hydrocarbon feedstock with molten metal in the presence of molten salt to produce H₂ and solid carbon is known from WO 2020/161192 and Rahimi et al., Carbon, 2019, vol. 151, pages 181-191. The treatment of a hydrocarbon feedstock with molten salt is disclosed in WO 2019/226416. These documents do not teach how to cope with possible contaminants, such as CO₂, in the hydrocarbon feedstock. There is thus a need in the art for a molten metal pyrolysis process which is capable to directly prepare valuable products such as syngas from a hydrocarbon feedstock comprising common contaminants such as CO₂.

### Summary of the invention

The invention relates to the use of molten metal pyrolysis for the reforming of methane and carbon dioxide into hydrogen gas and carbon monoxide. Preferably, the molten metal is combined with molten salt, especially as a dispersion of molten metal particles in molten salt. The invention further concerns a method for the reforming of methane and carbon dioxide into hydrogen gas and carbon monoxide by molten metal pyrolysis, comprising
(i) feeding a feedstock, comprising hydrocarbon and carbon dioxide, into a pyrolysis reactor comprising molten metal and molten salt;
(ii) pyrolyzing the methane and carbon dioxide into hydrogen gas and carbon monoxide by molten metal catalysis; and
(iii) collecting a product gas containing hydrogen gas and carbon monoxide that evolves from the reactor.

Accordingly, the invention is described according to the following list of preferred embodiments:
1. Use of molten metal pyrolysis for the reforming of methane and carbon dioxide into hydrogen gas and carbon monoxide.
2. Method for the reforming of methane and carbon dioxide into hydrogen gas and carbon monoxide by molten metal pyrolysis, comprising:
   (i) feeding a feedstock, comprising methane and carbon dioxide, into a pyrolysis reactor comprising molten metal and molten salt;
   (ii) pyrolyzing the methane and carbon dioxide into hydrogen gas and carbon monoxide by molten metal catalysis; and
   (iii) collecting a product gas containing hydrogen gas and carbon monoxide that evolves from the reactor.
3. The method according to embodiment 2, wherein the pyrolysis reactor comprises a layer of molten salt on top of a layer of molten metal.
4. The method according to embodiment 2, wherein the pyrolysis reactor comprises a dispersion of molten metal in a layer of molten salt.
5. The method according to any one of embodiments 2 - 4, wherein the temperature in the reactor during step (ii) is in the range of 500 - 1400 °C, preferably in the range of 800 - 1300 °C.
6. The method according to any one of embodiments 2 - 5, wherein the metal in the molten metal is selected from the group consisting of Sn, Fe, Zn, In, Ga, W, Mo, Mn, Cr, Ni, Bi, Cu, Co, Sb, Pb, Pt, Te, Rh, Au, Ru and Ag, preferably selected from the group of Cu, Ni, Co, Zn and Fe, most preferably the metal is Fe.
7. The method according to any one of embodiments 2 - 6, wherein the salt has a heat capacity of at most 2 J/K, more preferably at most 1.7 J/K, most preferably at most 1.6 J/K.
8. The method according to any one of embodiments 2 - 7, wherein the salt comprises at least one of BaCI, KNO₃, NaNO₃, NaCl, KCl, LiCl, MgCl₂, CuCl, NiCl₂, ZnCl₂, ZnBr₂ and NaBr.
9. The method according to any one of embodiments 2 - 8, wherein the reactor is a bubble column reactor.
10. The method according to any one of embodiments 2 - 9, wherein the reactor is heated by inductive heating.
11. Use of a dispersion of molten metal in a layer of molten salt for the pyrolysis of a hydrocarbon.
12. The use according to embodiment 11, wherein the pyrolysis is the dry reforming of methane and carbon dioxide into hydrogen gas and carbon monoxide.
13. The use according to embodiment 11 or 12, wherein the pyrolysis occurs in a reactor having a temperature in the range of 500 - 1400 °C, more preferably in the range of 800 - 1300 °C.
14. The use according to any one of embodiments 11 - 13, which is for one or more of:
   (a) establishing a more even heath distribution throughout the reactor, thereby preferably avoiding hotspots within the reactor;
   (b) reducing the amount of side-reactions, and preferably increasing the yield of the desired products and/or reducing the need for downstream separation to remove side-products;
   (c) reducing the amount of metal needed to achieve similar conversions, as compared to the use of a layer of molten metal; and
   (d) protecting the molten metal by one or more of reducing metal loss due to evaporation, maintaining its catalytic ability and/or preventing deterioration of its catalytic ability.

### Description of embodiments

The present invention concerns a method, as well as several uses of molten metal. Anything described here below for the method according to the invention also applies to the uses, and vice versa.

### METHOD

In a first aspect, the invention provides a method for the reforming of methane and carbon dioxide into hydrogen gas and carbon monoxide by molten metal pyrolysis. Such a method may also be referred to as dry reforming. The method according to the invention comprises at least the following steps:
(i) feeding a feedstock, comprising hydrocarbon and carbon dioxide, into a pyrolysis reactor comprising molten metal and molten salt;
(ii) pyrolyzing the methane and carbon dioxide into hydrogen gas and carbon monoxide by molten metal catalysis; and
(iii) collecting a product gas containing hydrogen gas and carbon monoxide that evolves from the reactor.

Molten metal pyrolysis of hydrocarbons is known, e.g. from WO 2020/161192. Herein, hydrocarbons are fed through a layer of molten metal catalyst which cracks the hydrocarbon into solid carbon and hydrogen gas. Both these species have a lower density than the molten metal, causing the products to diffuse towards the top of the liquid metal layer. The present inventors have for the first time applies this principle to the pyrolysis of methane in the presence of carbon dioxide, and were able to produce hydrogen gas and carbon monoxide as products. Thus, the inventors have for the first time used molten metal for a dry reforming process. The process according to the invention affords a synthesis gas (or syngas) comprising hydrogen and carbon monoxide, which is a valuable product, e.g. as feedstock for the production of synthetic natural gas, methanol or ammonia.

The steps of the method can be performed in any order, or sequentially, or simultaneously, as will be clear to a skilled person. The steps of the method are preferably performed simultaneously, and the method operates (semi-)continuously.

The feedstock comprises hydrocarbon and carbon dioxide. The hydrocarbon may be selected from the group consisting of methane, ethane, propane, butane, pentane, C6+ hydrocarbons (e.g. hexane, benzene, dodecane naphtha, kerosene, asphalt) and hydrocarbon residues (e.g. crude oil, fuel oil, cycle oil, slurry oil, gas oil, heavy crude oil, pitch, coal tars, coal distillates, natural tar and crude bottoms). Preferably, the hydrocarbon is selected from the group consisting of methane, ethane, propane, butane and benzene, more preferably methane and/or ethane. The hydrocarbon preferably comprises at least methane. Most preferably the hydrocarbon is methane. The process according to the invention is able to cope with other hydrocarbons, such as ethane, propane and butane. Feedstocks comprising hydrocarbon such as methane and carbon dioxide are well-known in the art, as is their use in dry reforming. Preferred sources of the feedstock are natural gas, syngas, methane, but also fuel gases, refinery gases, off gases and other industrial gases comprising methane and carbon dioxide can be used. Highly preferred sources of the hydrocarbons are light flue gas, (vented) natural gas, sour gas and gas from fracking wells. The feedstock may further comprise inert carrier gases, such as argon. Such a carrier gas does not affect the pyrolysis reaction, but facilitates the upward movement of the products of the pyrolysis reaction to the top of the molten mass. However, since one mole of methane and one mole of carbon dioxide is converted into two moles of hydrogen gas and two moles of carbon monoxide, the associated increase in volume ensures enough upward movement without the need of a carrier gas.

The ratio of CO₂ to hydrocarbon in the feedstock is not particularly relevant in the context of the present invention. When there are more hydrocarbon carbon atoms then CO₂ (molar ratio CO₂ to carbon atoms in the hydrocarbon is below 1), some solid carbon may be produced as coproduct. In view of the easy separation by virtue of the molten salt, any solid carbon is readily obtained and separated as a valuable side-product. When there is more CO₂ than hydrocarbon carbon atoms (molar ratio CO₂ to carbon atoms in the hydrocarbon is above 1), the product mixture will contain high levels of CO and H₂. In view of the main goal of producing a syngas, it is preferred that the feedstock comprised CO₂ and hydrocarbon is a molar ratio CO₂ / C of ≥ 1, preferably in the range 0.1 - 1, more preferably 0.2 - 0.8, wherein "C" refers to the amount of carbon atoms present in the hydrocarbon. For example, each methane molecule contains one carbon atom, and in case the hydrocarbon would be pure methane, it is preferred that the molar ratio CO₂ / CH₄ ≥ 1. In case the hydrocarbon would be pure ethane, comprising 2 carbon atoms, it is preferred that the molar ratio CO₂ / C₂H₆ ≥ 0.5.

### Step (i)

In step (i), the feedstock, which comprises hydrocarbon and carbon dioxide, is fed into a pyrolysis reactor comprising molten metal and molten salt, which together form a molten mass within the reactor. The feedstock is preferably fed continuously. It is convenient to feed the feedstock into the bottom or near the bottom of the reactor, so that it can travel upwards through the molten metal and molten salt.

A pyrolysis reactor is a reactor suitable for containing a molten metal catalyst. Such reactors are known in the art, and are described in more detail later herein. In a preferred embodiment, the reactor has a gas inlet for receiving the feedstock at or near the bottom end of the reactor, an gas outlet for discharging a product gas comprising hydrogen and carbon monoxide at or near the top end. The feeding of step (i) typically involves bubbling of the feedstock though the molten mass inside the reactor. Any bubble size normally used in such reactors can be used in the context of the present invention. In a preferred embodiment, the diameter of the bubbles is in the range of 0.1 - 1000 µm, more preferably in the range of 1 - 800 µm, most preferably in the range of 25 - 500 µm. The inventors found that such relatively small bubble sizes improved the hydrodynamics and the productivity of the process.

In preferred embodiments the stream of feedstock is fed into the pyrolysis reactor at a rate close to the maximum catalytic capacity of the molten metal catalyst or higher, preferably the rate of feeding is at least 90% (by mole per second) of the catalytic capacity of the molten metal. In preferred embodiments the stream of hydrocarbon is fed into the pyrolysis reactor at a rate exceeding the catalytic capacity of the molten metal catalyst, preferably by at least 10 % or even at least 50 %. In terms of flow rate, the feedstock may be introduced at any suitable rate, such as in the range of 10 - 1000 mL/min, preferably 50 - 500 mL/min, more preferably 150 - 300 mL/min. Excellent results have been obtained with a flow rate of 100 mL/min, but the inventors surprisingly found that the catalytic activity of the molten mass was even higher at an increased flow rate of 200 mL/min. At such a flow rate, the methane consumption and the hydrogen evolution increased, indicative of an increased catalytic activity. Alternatively, the flow rate is defined as GHSV, which takes into account the reactor volume. Preferably, the process is operated with a GHSV in the range of 4 - 100 h⁻¹, more preferably 5 - 50 h⁻¹, most preferably 10 - 25 h⁻¹. Excellent results have been obtained with a GHSV of 6 h⁻¹, but the inventors surprisingly found that the catalytic activity of the molten mass was even higher at an increased flow rate of 12 h⁻¹.

### The reactor

The method according to the invention makes use a pyrolysis reactor as known in the art. The reactor according to the invention preferably comprises:
(a) a reactor interior (e.g. a vessel) for holding a molten mass comprising molten catalytic metal and molten salt,
(b) an inlet for receiving the hydrocarbon at or near the bottom end of the reactor interior
(c) an outlet for discharging a product gas comprising hydrogen and carbon monoxide at the top end of the reactor;
(d) one or more inlets and outlets for receiving and discharging molten metal and molten salt.

The reactor according to the invention is configured for molten metal pyrolysis of hydrocarbons using the method according to the invention, and it can be seen as a conventional molten metal pyrolysis reactor. The vessel (5) can be any vessel suitable for performing molten metal pyrolysis. Suitable materials for such a vessel or for other components of the reactor according to the invention are known in the art. Preferred materials are quartz, stainless steel, and ceramics. A preferred stainless steel is SAE 304 stainless steel.

In preferred embodiments, the reactor is a bubble column reactor. A bubble column reactor is a reactor in which a gas can be bubbled through liquid layers. Preferred bubble columns have means for increasing the surface area of the gaseous feedstock, such as a frit, preferably a stainless steel frit. A bubble column preferably has an aspect ratio wherein it is at least 5 times as high as it is wide, preferably at least 8 times as high as it is wide, more preferably at least 10 times as high as it is wide. Preferred ratios range from about 150:12 to about 40:1. The height and diameter of the bubble column depend on the envisaged volume of the molten mass layer of molten metal and molten salt. A skilled person can select a suitable bubble column. Examples of possible lengths for the longest aspect of a bubble column are 150 mm and 1100 mm. The bubble column can have any shape, such as straight, curved, U-shaped, or L-shaped. Preferably a bubble column is straight or substantially straight.

The reactor according to the invention typically comprises means for heating. These means for heating should be suitable for achieving temperatures required for performing the method according to the invention. Preferably, a reactor according to the invention is configured to have product streams of similar temperatures be integrated near each other. The reactor according to the invention can be in an oven or furnace, or means for inductive heating of the molten metal are in place. Preferably, heating means are integrated in the reactor according to the invention. Preferred heating means are inductive heating coils, ovens, furnaces, heating sleeves, and heating blocks. Most preferably, the heating means are for inductive heating the reactor, e.g. by using inductive heating coils. Inductive heating reduces heat loss, increases the heat transfer throughout the reactor and thus leads to a more homogeneous temperature distribution within the reactor. As such, hot spots. where unwanted side reactions may occur, are avoided. Also, inductive heating can be used to create specific temperature zones within the reactor by targeted heating.

In preferred embodiments, heating means surround the vessel, preferably an electric arc furnace. Heating means can be powered using an external power source such as electricity, or they can be powered using part of the methane in the feedstock, or using recovered methane, or using product gas, or using produced hydrogen gas. In preferred embodiments is provided the reactor according to the invention, wherein the reactor is heated using methane, the hydrogen gas, or electricity.

A reactor according to the invention can be used in a centralized large scale systems, for example in a petrochemical complex or at an industrial site or plant. Preferably a reactor according to the invention is used as a decentral system, or as part of a decentral system, for example at a petrol station or at a hydrogen gas supply location.

In the reactor according to the invention pumps can be present. A skilled person will be able to select any suitable pump. Alternately, pressure can be generated via other means, such as pre-pressurized containers, to promote flow of streams into and within the reactor.

Produced product gas evolves from the molten mass and can be collected in a headspace, along with possible unconverted methane gas. This headspace can be cooled to prevent possible reactions, oxidation of reactor components, and/or evaporation of molten salt or of molten metal. Such cooling can be done via any suitable cooling means, for example using a fan that blows in external air. The product gas can be collected via an outlet for discharging a product gas comprising hydrogen and carbon monoxide at the top end of the reactor, after which it can be transported with an optional pump compressor towards means for separating syngas from unconverted methane gas. The recovered methane can be fed into the original stream of methane, for instance at a junction before the stream enters the reactor. Preferred means for separating gases comprise adsorbent materials, such as a pressure swing adsorption unit.

The molten mass comprises molten metal and molten salt. In a first preferred embodiment, the molten salt forms a layer beneath a layer of the molten salt. The molten salt is immiscible with the molten metal. It has a lower density, and can therefore form a layer on top of the molten metal. Feedstock that enters from the bottom of the reactor is then first contacted with the catalytic metal, which performs the pyrolysis reaction, and the evolving products then pass through the salt layer. The salt layer can trap evaporated or evaporating metal to allow its reuptake in the molten metal layer. Thus the molten salt protects the catalytic layer of molten metal, in that it helps maintain its catalytic ability or prevents deterioration of its catalytic ability. Thus the layer of molten salt can act as a protecting layer. In some embodiments the method according to the invention, wherein the protecting layer has a solubility for hydrogen gas and/or carbon monoxide, which is at least substantially equal to that of the catalytic layer, preferably wherein the protecting layer has a higher solubility for hydrogen and/or carbon monoxide, preferably for both, than the catalytic layer.

In a second and even more preferred embodiment, the molten mass is a dispersion of molten metal in a continuous phase of molten salt. As the molten metal is dispersed within the layer of molten salt, the protective effect of the molten salt also applies to this embodiment. Advantageously, the surface area of the molten metal is greatly enhanced by making small particles of molten metal into a continuous phase of molten salt. Although catalytic activity may occur within the bulk of the molten metal, it is much faster at the surface thereof, since contact of the incoming gases with the metal is faster than with the salt. By increasing the surface area of the metal, the rate of the pyrolysis reaction can be greatly improved, and much less metal is needed to achieve the same conversions. The inventors found that up to a 10-fold decrease in metal content could be applied, compared to the use of a layer of molten metal, while keeping the same conversions. A further advantage of the use of a dispersion resides in a more even heath distribution throughout the molten mass. In conventional systems, the molten metal near the wall of the reactor will be heated more heavily, which creates hotspots within the molten metal. At these hotspots, side-reactions may occur and catalytic activity may be lost, thereby reducing the efficiency of the pyrolysis reaction. When a dispersion of molten metal in molten salt is used, the molten metal particles are more evenly heated avoiding the formation of hot spots. Preferably, the molten metal particles are heated, which in turn heat the surrounding molten salt by conductive heating.

Dispersions of molten metal in molten salt are known in the art (e.g. from Adachi et al, J. Nucl. Sci. Technol. 1988, 25(9), 712-720), and can be prepared in any suitable way. For example, a spray of molten metal may be added on top of a layer of molten salt, such that small droplets of molten metal slowly migrate through the salt layer to the bottom of the reactor. Preferably, the molten metal particles have a volume-weighted mode diameter in the range of 5 µm - 10 cm, more preferably in the range of 10 µm - 10 mm.

The molten metal can be a pure metal, i.e. a single species of metal. In this case, the metal should be a catalytic metal capable of catalysing the pyrolysis. Metallic catalysts (e.g., Fe, ...) achieve high conversion and selectivity to H₂ at moderate temperatures. In case their melting temperatures are extremely high and as solids, they are rapidly deactivated by solid carbon (coke). In preferred embodiments, the metal in the molten metal is selected from the group consisting of Sn, Fe, Zn, In, Ga, W, Mo, Mn, Cr, Ni, Bi, Cu, Co, Sb, Pb, Pt, Te, Rh, Au, Ru and Ag, preferably selected from the group consisting of Sn, Fe, Zn, Co, In, Ga, W, Mo, Mn, Cu, Ni and Cr, more preferably selected from the group of Cu, Ni, Co, Zn and Fe. Most preferably, the metal comprises at least Fe, more preferably is Fe. The molten metal can also comprise more than one species of metal, thus essentially being a molten alloy. Such liquid alloys preferably comprise catalytically active metals dissolved in low-melting-temperature metal such as Sn, Pb, Bi, In, or Ga. Known equilibrium phase behaviour can be used to produce catalysts that melt at or below 8000 °C, preferably 700 °C. Preferred alloys comprise Ni, Cu or Fe as catalytic metal. Highly preferred alloys comprise Sn, Pb, Ga or Bi as low-melting-temperature metal, more preferably Sn or Bi. An especially preferred alloy comprises Sn and/or Bi as low-melting-temperature metal and Cu and/or Ni as catalytic metal. Catalytically active metal is preferably present at at most 50 mol% of the alloy, more preferably at most 35 mol%, most preferably at about 25-30 mol%, such as 27 mol%. Catalytically active metal is preferably present at at least 5 mol% of the alloy, more preferably at least 10 mol%, even more preferably at least 15 mol%. Catalytically active metal is preferably atomically dispersed.

A single salt or a mixture of salts can be used as molten salt. Preferred salts are metal salts, such as metal halides, metal carbonates, metal nitrates and metal sulphates. The salt is typically selected based on thermal stability at the process temperature, sufficiently low melting temperature to be liquid at the process temperature, chemical inertness and salts having a low volatility at the processing temperature. Mixtures of salts can be used to fine-tune the properties. For example, a mixture can be used to lower the melting point if that would be needed to be liquid at the process temperature. The salt preferably comprises a metal selected from Li, Mg, Zn, Cu, Ni, Al, B, Na and K, preferably selected from Li, Mg, Zn, Al, Na and K, more preferably the salt comprises Na, K or Mg, most preferably Na or K. Preferred anions are small anions, preferably monoatomic anions or inorganic anions having preferably at most 7, 5, or 4 atoms, for example comprising CI or NO₃. Preferred salts are oxides, halides, sulphates, phosphates and mixtures thereof. More preferably, the salt comprises at least one of oxides, halides, sulphates and phosphates, most preferably at least one of oxides and halides. In an especially preferred embodiment, the salt is an alkali metal or an alkaline earth metal thereof. Suitable salts include BaCI, KNO₃, NaNO₃, NaCl, KCl, LiCl, MgCl₂, CuCl, NiCl₂, ZnCl₂, ZnBr₂ and NaBr. In a preferred embodiment, the salt is selected from the group consisting of BaCI, NaCl, KCl, LiCl, MgCl₂, ZnCl₂, ZnBr₂ and NaBr. These salts were found to have advantageous properties in terms of density and wettability. Especially preferred are MgCl₂ and NiCl₂. Mixtures of salts comprising two species of salts preferably comprise those species in a weight ratio in the range of 40:60 - 60:40, more preferably at about 50:50. Possibly, an eutectic mixture of salts is used, which melt at a lower temperature then the individual salts.

In one embodiment, the salt is selected based on its stability and heat capacity. As the skilled person will understand, the molten salt should be stable at the temperature and conditions (such as presence of H₂) within the reactor. Further, it is convenient to use a salt with a low heat capacity, to reduce energy requirements in its melting or heating. Preferred molten salts melt reversibly. In this context, a salt is considered stable at a temperature when after 1 hour at that temperature at most 10%, more preferably at most 2%, most preferably at most 0.1% of the salt has decomposed. Assays for salt stability are widely known, for example the stability of nitrate ions can be assayed using the nitrate reductase enzymatic assay. In a preferred embodiment, the salt has a heat capacity of at most 2 J/K, more preferably at most 1.7 J/K, most preferably at most 1.6 J/K. Preferred salts or mixtures of salts are liquid at about 1000 °C. Preferred salts or mixtures of salts have a melting point above 90 °C, preferably above 150 °C, more preferably above 250 °C, or even above 400 °C. Most preferably, the melting temperature is above 500 °C.

### Step (ii)

Pyrolysis takes place inside the reactor. Pyrolysis is the thermal decomposition of materials, in this case of methane and carbon monoxide, at elevated temperatures, preferably in an inert atmosphere. A skilled person will know how to implement pyrolysis, for example by using argon to create an inert atmosphere, or by configuring the stream of the feedstock to spurge the reactor, leading to an inert atmosphere.

The molten mass is a liquid phase wherein pyrolysis takes place. Conveniently, the molten metal can ensure an inert atmosphere and, such that the reactants are susceptible to pyrolysis, obviating the need for a further inert gas. Therefore, preferred feedstocks are free or substantially free of oxygen.

Preferably, at least part of the reactor is kept at a temperature in the range of 500 - 1400 °C, more preferably in the range of 800 - 1300 °C, which are desirable temperatures for the pyrolysis reactions to take place. The temperature within the reactor can be homogeneous, but the reactor may also have two or more zones of different temperature. For example, the reactor can have a reaction temperature zone in which the reaction takes place, and a separation temperature zone where separation takes place. In the separation zone, the molten metal may be absent and a layer of molten salt is present. In case the pyrolysis would produce solid by-products, such as solid carbon, this is easily isolated from the reactor at the separation zone where no metal is present. Since no reaction need to take place in the separation zone, the temperature there may be lower than defined herein for performing the pyrolysis reactions. The reaction temperature zone contains the molten metal, which acts as catalyst in the pyrolysis reaction. Preferably, the reaction temperature zone has a temperature in the range of 500 - 1400 °C, more preferably in the range of 800 - 1300 °C.

The inventors have found that the process according to the invention is perfectly tuneable. By selecting the specific metal catalyst and conditions within the reactor, pyrolysis reactions of hydrocarbons (CₓH_{y} → x C + y/2 H₂), dry reforming reactions (CO₂ + CH₄ → 2 CO + 2 H₂) and reverse Boudouard reactions (C + CO₂ → 2 CO) could take place, if the appropriate starting materials are present in the feedstock and/or formed in the reactor. By creating specific conditions at specific zones within the reactor, the reactions that take place within those zones can be tuned towards the desired product. As such, the ratio of H₂ and CO that is formed may be tuned at wish by for example promoting a Boudouard or dry reforming reactions.

### Step (iii)

In step (iii) a product gas containing hydrogen and carbon monoxide that evolves from the reactor is collected. The product gas is the gas that evolves from the molten mass in the reactor. It can be pure or substantially pure mixture of hydrogen and carbon monoxide, but it can also comprise unconverted methane, carbon dioxide, and possibly minor amounts or intermediate or by-products. The collected product gas can be used in further applications, for example as a fuel source or for the formation of valuable compounds.

Preferably, the product gas is treated further. In preferred embodiments the method according to the invention further comprises separating the product gas obtained in step (iii) into unconverted methane gas and a product syngas, to obtain purified syngas and recovered methane. If preferred, the hydrogen gas and the carbon monoxide could also be separated, depending on the desired further use of these products. Separation of gases is known in the art, and a skilled person can select suitable methods for separation of syngas from unconverted methane. Suitable techniques include cryogenic distillation or an adsorption to a sorbent, wherein use of a sorbent is preferred. Examples of sorbent materials are zeolites, metal-organic frameworks, activated carbon, and molecular sieves, preferably zeolites, metal-organic frameworks, and molecular sieves, most preferably zeolites. A highly preferred technique is pressure swing adsorption (PSA) wherein adsorbent material is used as a trap that at high pressure preferentially adsorbs either H₂, CO, or the unconverted methane, after which low pressure is used to desorb the adsorbed gas.

The recovered methane can be used for any application. Conveniently it is reused in the method according to the invention. In preferred embodiments, the method according to the invention is provided, wherein the recovered methane is recycled back into the pyrolysis reactor as part of step (i). The recovered methane can be fed into the feedstock of step (i) before it enters the pyrolysis reactor, or it can be separately fed into the pyrolysis reactor. Preferably the recovered methane is fed into the feedstock of step (i).

### USES

In another aspect, the invention provides the use of molten metal pyrolysis for the reforming of methane and carbon dioxide into hydrogen gas and carbon monoxide. Preferably, a combination of molten metal and molten salt is used for dry reforming. The metal and the salt are defined in more detail above. The combination typically is present in a pyrolysis reactor as described above. The use of molten metal pyrolysis for dry reforming of a feedstock comprising methane and carbon dioxide to form hydrogen gas and carbon monoxide is unprecedented in the art. The inventors not only found that such a process is efficiently performed, but also provides improved heat transport within the reactor which is needed for progression of the endothermic reaction, and an excellent contact between the feedstock and the catalytic metal thereby. Also the catalytic metal at the catalytic surface is constantly reformed because of flow within the molten metal.

In another aspect, the invention provides the dispersion of molten metal in a layer of molten salt for the pyrolysis of a hydrocarbon. The use according to this aspect is preferably combined with the inductive heating of the pyrolysis reactor. The advantages associated with the use of dispersion are more broadly applicable than in the dry reforming reaction of methane and carbon dioxide. Thus, in a preferred embodiment, the pyrolysis of a hydrocarbon is the dry reforming of methane and carbon dioxide into hydrogen gas and carbon monoxide. However, in an alternative embodiment, the pyrolysis is of a hydrocarbon to form hydrogen gas and solid carbon, for example as described in WO 2020/161192, incorporated herein by reference in its entirety. The use according to this aspects has several advantages, including (a) a more even heath distribution throughout the reactor, thereby avoiding hotspots within the reactor, (b) reducing the amount of side-reactions, and thus increasing the yield of the desired products as well as reducing the need for downstream separation to remove side-products, (c) reducing the amount of metal needed to achieve similar conversions, as compared to the use of a layer of molten metal, and (d) protecting the molten metal to reduce metal loss due to evaporation and thus maintaining its catalytic ability and/or preventing deterioration of its catalytic ability.

As described for the method according to the invention, molten salt can be used to separate solid carbon from a molten metal. In preferred embodiments, the molten salt is used as an extracting medium to extract solid carbon from a molten metal. The molten salt is preferably as described elsewhere herein. The solid carbon is preferably as described elsewhere herein. The molten metal is preferably a molten metal catalyst and the separation is preferably in the context of molten metal pyrolysis of hydrocarbons. The use is preferably in a reactor as described elsewhere herein. In preferred embodiments this use is to protect a molten metal catalyst.

### Description of the figures

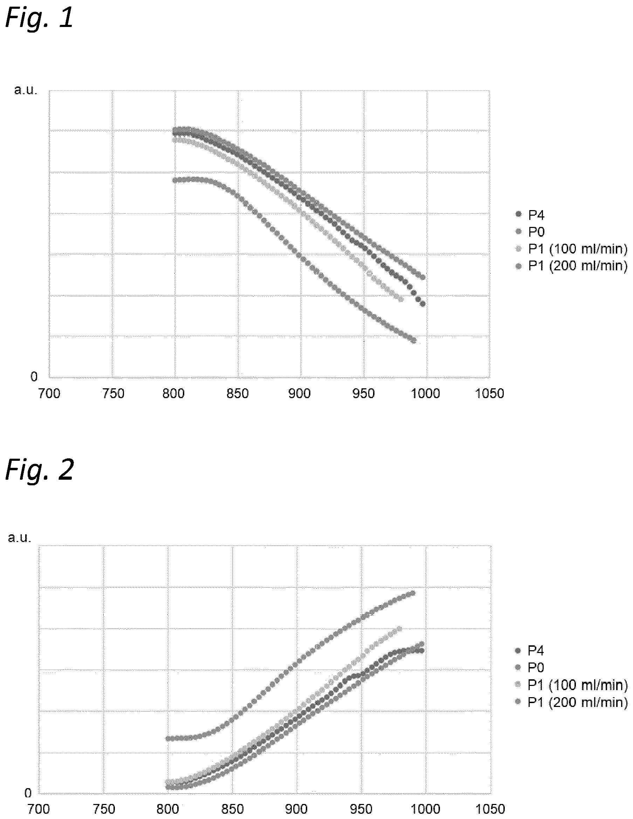

Figures 1 and 2 show the results of Example 2, and respectively depict methane conversion and hydrogen evolution at specific reactor temperature (in °C) on the x-axis.

### General Definitions

In this document and in its claims, the verb "to comprise" and its conjugations is used in its non-limiting sense to mean that items following the word are included, but items not specifically mentioned are not excluded. In addition, reference to an element by the indefinite article "a" or "an" does not exclude the possibility that more than one of the element is present, unless the context clearly requires that there be one and only one of the elements. The indefinite article "a" or "an" thus usually means "at least one". The word "about" or "approximately" when used in association with a numerical value (e.g. about 10) preferably means that the value may be the given value more or less 1% of the value.

The present invention has been described above with reference to a number of exemplary embodiments. Modifications and alternative implementations of some parts or elements are possible, and are included in the scope of protection as defined in the appended claims. All citations of literature and patent documents are hereby incorporated by reference.

### Examples

The invention is illustrated by the following examples.

### Example 1 -Dry reforming in molten metal

Methane and CO₂ in varying concentrations (see Table 1) was fed to a molten metal (gallium) reactor operated at a temperature of 1000 °C and a pressure of 1.4 bar(a) (pressure measured at the bottom of the reactor). At steady state, input and output concentration of CO, CO₂ and CH₄ were determined. Input concentrations were measured and controlled by mass flow controllers and the output concentrations was measured with gas chromatography.

**Table 1 - feed compositions**

| Run | Feed composition (mol %) | | Output concentration CO (mol %) |
|---|---|---|---|
| | CO₂ | CH₄ | |
| 1 | 10 | 90 | 2.0 |
| 2 | 20 | 80 | 2.5 |
| 3 | 30 | 70 | 3.0 |
| 4 | 100 | 0 | 0 |
| 5 | 0 | 100 | 0 |

For each feedstock comprising CO₂ and CH₄, CO was formed, which implies that H₂ was also formed (not measured). These results demonstrate that molten metal pyrolysis is suitable for dry reforming and making a syngas comprising CO and H₂, even when a catalyst with relative low activity is used (gallium).

### Example 2 - Bubble size test

A methane / argon (50/50) mixture was fed to a molten metal (gallium) reactor operated at a temperature of 800 - 1000 °C and a pressure of 1.4 bar(a) (pressure measured at the bottom of the reactor). The feedstock comprising CH₄ was fed at a rate of 100 ml/min or 200 ml/min. Three different spargers were used to introduce the feedstock into the reactor, having a pore diameter of (P0) 160-250 µm, (P1) 100-160 µm, and (P4) 10-16 µm. At steady state, the concentration of CH₄ and H₂ in the output was measured with gas chromatography. The measured methane conversion and hydrogen evolution are shown in Figure 1 (methane conversion) and Figure 2 (hydrogen evolution).

De results show that the bubble size did not have a significant effect on the methane conversion and hydrogen formation. However, increasing the feed rate from 100 ml/min to 200 ml/min significantly increased the methane conversion and hydrogen formation.

## Claims

1. Use of molten metal pyrolysis for the reforming of methane and carbon dioxide into hydrogen gas and carbon monoxide.

2. Method for the reforming of methane and carbon dioxide into hydrogen gas and carbon monoxide by molten metal pyrolysis, comprising:
(i) feeding a feedstock, comprising methane and carbon dioxide, into a pyrolysis reactor comprising molten metal and molten salt;
(ii) pyrolyzing the methane and carbon dioxide into hydrogen gas and carbon monoxide by molten metal catalysis; and
(iii) collecting a product gas containing hydrogen gas and carbon monoxide that evolves from the reactor.

3. The method according to claim 2, wherein the pyrolysis reactor comprises a layer of molten salt on top of a layer of molten metal.

4. The method according to claim 2, wherein the pyrolysis reactor comprises a dispersion of molten metal in a layer of molten salt.

5. The method according to any one of claims 2 - 4, wherein the temperature in the reactor during step (ii) is in the range of 500 - 1400 °C, preferably in the range of 800 - 1300 °C.

6. The method according to any one of claims 2 - 5, wherein the metal in the molten metal is selected from the group consisting of Sn, Fe, Zn, In, Ga, W, Mo, Mn, Cr, Ni, Bi, Cu, Co, Sb, Pb, Pt, Te, Rh, Au, Ru and Ag, preferably selected from the group of Cu, Ni, Co, Zn and Fe, most preferably the metal is Fe.

7. The method according to any one of claims 2 - 6, wherein the salt has a heat capacity of at most 2 J/K, more preferably at most 1.7 J/K, most preferably at most 1.6 J/K.

8. The method according to any one of claims 2 - 7, wherein the salt comprises at least one of BaCl, KNO₃, NaNO₃, NaCl, KCl, LiCl, MgCl₂, CuCl, NiCl₂, ZnCl₂, ZnBr₂ and NaBr.

9. The method according to any one of claims 2 - 8, wherein the reactor is a bubble column reactor.

10. The method according to any one of claims 2 - 9, wherein the reactor is heated by inductive heating.

11. Use of a dispersion of molten metal in a layer of molten salt for the pyrolysis of a hydrocarbon.

12. The use according to claim 11, wherein the pyrolysis is the dry reforming of methane and carbon dioxide into hydrogen gas and carbon monoxide.

13. The use according to claim 11 or 12, wherein the pyrolysis occurs in a reactor having a temperature in the range of 500 - 1400 °C, more preferably in the range of 800 - 1300 °C.

14. The use according to any one of claims 11 - 13, which is for one or more of:
(a) establishing a more even heath distribution throughout the reactor, thereby preferably avoiding hotspots within the reactor;
(b) reducing the amount of side-reactions, and preferably increasing the yield of the desired products and/or reducing the need for downstream separation to remove side-products;
(c) reducing the amount of metal needed to achieve similar conversions, as compared to the use of a layer of molten metal; and
(d) protecting the molten metal by one or more of reducing metal loss due to evaporation, maintaining its catalytic ability and/or preventing deterioration of its catalytic ability.
